# DEMANDE DE BREVET EUROPEEN

(11) **EP 1 063 510 A1**
(43) Date de publication de la demande: **27.12.2000**
(21) Numéro de dépôt: 00401488.2
(22) Date de dépôt: 26.05.2000
(51) Int. Cl.: G01N 1/22, G01N 33/00

(54) **Installation d'analyse de l'atmosphère d'une enceinte de brasage ou étamage**

(30) Priorité: 24.06.1999 FR 9908087
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Chevalier, Gilbert, 78960 Voisins Le Bretonneux (FR); Leturmy, Marc, 78550 Gressey (FR)
(74) Mandataire: Mellul-Bendelac, Sylvie Lisette

(57) **Abrégé**

L'invention concerne une installation d'analyse de la teneur en au moins un élément de l'atmosphère d'une enceinte de brasage ou étamage à l'aide d'un alliage métallique, comportant les éléments suivants :
- au moins une ligne (1) de prélèvement d'un échantillon de gaz de l'enceinte,
- au moins un analyseur (2) apte à analyser ledit élément,
- au moins un filtre (3, 4) à coalescence situé sur la ligne de prélèvement en amont de l'analyseur,
- des moyens permettant que la portion de ligne de prélèvement située entre l'enceinte et le filtre à coalescence soit dépourvue de points froids qui pourraient causer la précipitation de composés solides ou pateux dans la portion de ligne.
- des moyens de détection (11) d'un éventuel bouchage de la ligne de prélèvement entre l'enceinte et l'analyseur

## Description

La présente invention concerne le domaine des installations d'analyse de gaz, et s'adresse tout particulièrement aux installations d'analyse de la teneur en au moins un élément de l'atmosphère d'une enceinte utilisée pour le brasage ou l'étamage à l'aide d'un alliage métallique, ces opérations de brasage ou étamage utilisant l'aide d'un flux chimique, qui comporte traditionnellement un ou plusieurs composants parmi les acides, les alcools, les résines, notamment les colophanes.

De telles opérations de brasage ou étamage interviennent notamment en électronique (brasage de composants électroniques sur circuit, brasage de circuits dans des fonds de boîtier, ou encore étamage de terminaison de composants électroniques).

Le rôle du fluxage est alors de nettoyer les surfaces métalliques à braser ou étamer (dégraissage, désoxydation, décontamination de couches adsorbées ....), ceci dans le but de faciliter le mouillage ultérieur de ces surfaces par la soudure.

Cette opération de fluxage est alors, le plus couramment, pratiquée à l'aide de flux chimiques, souvent obtenus à partir d'une base résineuse, complétée notamment par des composants acides.

On notera que deux des méthodes les plus couramment utilisées pour effectuer de telles opérations de brasage en électronique sont appelées "brasage à la vague", et "brasage par refusion".

Dans le premier cas des machines de brasage à la vague, la conception de ces machines est telle que les pièces à braser ou à étamer sont amenées en contact avec une ou plusieurs vagues de soudure liquide obtenues par circulation du bain de soudure contenu dans un bac, au travers d'une buse. Au préalable, les pièces (circuit, composant) ont généralement été fluxées dans une zone amont de la machine, à l'aide d'un spray ou mousse de flux, l'opération de fluxage étant suivie d'une opération de préchauffage qui est pratiquée pour activer les flux précédemment déposés sur le circuit et pour préchauffer les circuits ou composants avant leur arrivée dans la zone chaude de brasage.

Dans le cas du second type de méthode, dite de brasage par refusion, qui regroupe d'ailleurs sous ce vocable plusieurs techniques, on utilise non plus un bain de soudure liquide mais une pâte à braser contenant l'alliage de brasure, formulation de pâte dans laquelle le flux chimique est inclus, qui est déposée sur le support et à laquelle est apportée une certaine quantité de chaleur permettant d'obtenir la fusion de l'alliage métallique, le plus souvent ce transfert thermique est réalisé dans un four continu.

La présente invention s'inscrit dans un contexte où les utilisateurs de gaz industriels (électronique, traitement thermique, alimentaire etc...) ont de plus en plus couramment besoin d'analyser un ou plusieurs composants de l'atmosphère qu'ils mettent en oeuvre au niveau d'un poste utilisateur donné, ceci afin d'être en mesure d'effectuer un contrôle qualité complet des pièces traitées, contrôle qualité complet supposant notamment de pouvoir connaître dans quelles conditions d'atmosphère chaque pièce a été traitée.

Selon l'application visée, interviennent également des conditions de sécurité (risques d'explosion).

Les clients utilisateurs de gaz veulent donc couramment pouvoir connaître ces conditions d'atmosphère, voire les visualiser, les archiver, avoir une traçabilité, et même traiter ces valeurs ainsi archivées.

On conçoit alors qu'il faut pouvoir être en mesure de proposer à ces clients utilisateurs de gaz industriels des méthodes et équipements d'analyse permettant de prélever des échantillons de gaz aux différents points d'analyse suivis dans l'enceinte utilisée pour le traitement, permettant de minimiser le temps de réponse du ou des analyseurs concernés, d'assurer au niveau de la baie d'analyse l'approvisionnement en échantillons de gaz qui soient représentatifs de l'atmosphère de l'enceinte.

A titre illustratif, on se reportera aux documents suivants au nom de la Demanderesse, qui s'intéresse également à ce domaine de l'analyse d'atmosphère ou de la régulation d'atmosphère dans des enceintes de brasage ou étamage : FR-98 07498 ou encore EP-A-839 599.

Les travaux qu'a poursuivis la demanderesse dans ce domaine ont permis de remettre en cause la fiabilité des systèmes d'analyse actuellement présents sur de telles installations de brasage ou étamage, et notamment les informations en termes de teneur résiduelle en oxygène dans l'atmosphère de l'enceinte pour des opérations réalisées sous azote.

Ces incertitudes soulèvent de sérieux doutes quant à la qualité de la production des machines considérées de brasage ou étamage.

Un des objectifs de la présente invention est alors d'apporter une réponse au problème technique précédemment mentionné, donc notamment d'améliorer la fiabilité des installations d'analyse de gaz travaillant sur de tels procédés de brasage ou étamage à l'aide d'alliage métallique et en présence de flux chimiques.

L'installation d'analyse selon l'invention de la teneur en au moins un élément de l'atmosphère d'une enceinte de brasage ou étamage à l'aide d'un alliage métallique comporte alors les éléments suivants :
- au moins une ligne de prélèvement d'un échantillon de gaz de l'enceinte ;
- au moins un analyseur apte à analyser ledit élément ;
- au moins un filtre à coalescence situé sur la ligne de prélèvement en amont de l'analyseur ;
- des moyens permettant de réaliser le fait que la portion de ligne de prélèvement située entre l'enceinte et ledit au moins un filtre à coalescence soit dépourvue de points froids qui pourraient causer la précipitation de composés dans ladite portion (i.e solides ou semi solides, liquides, pateux);
- des moyens de détection d'un bouchage éventuel de la ligne de prélèvement entre l'enceinte et l'analyseur.

L'installation selon l'invention peut par ailleurs comporter l'une ou plusieurs des caractéristiques techniques suivantes :
- plusieurs filtres à coalescence de grades différents placés en série sur la ligne de prélèvement en amont de l'analyseur ;
- au moins deux filtres à coalescence placés en série offrant sur le parcours de prélèvement du gaz des performances de rétention croissantes ;
- ledit au moins un filtre à coalescence est positionné dans la proximité immédiate de la paroi de l'enceinte où se connecte la ligne de prélèvement ;
- ledit au moins un filtre à coalescence est positionné à proximité de la paroi de l'enceinte où se connecte la ligne de prélèvement et on a isolé thermiquement ladite portion de ligne de prélèvement allant de la paroi au filtre à coalescence ;
- l'installation comporte des moyens de chauffage de ladite portion de ligne de prélèvement située entre l'enceinte et le filtre à coalescence, aptent à porter cette portion de ligne à une température au-delà du niveau de température en deçà de laquelle peuvent intervenir des phénomènes de précipitation de composés (i.e de composés solides ou semi solides, liquides, pâteux) ;
- l'installation comporte un pressostat en aval de l'analyseur sur sa ligne d'évacuation de gaz, et en amont d'un organe de pompage ;
- l'installation comporte un pressostat ou un organe mesureur de débit situé en amont de l'analyseur ;
- l'installation comporte un organe de refroidissement dudit au moins un filtre à coalescence, tel un ventilateur.

C'est donc le mérite de la présente invention d'avoir mis en évidence le manque de fiabilité des systèmes actuels d'analyse d'atmosphère dans de telles installations de brasage ou étamage à l'aide d'alliage métallique, notamment celles s'intéressant à l'analyse de la teneur résiduelle en oxygène dans des atmosphères de brasage ou étamage à base d'azote. Ce manque de fiabilité est notamment à relier aux méthodes de prélèvement de ces systèmes d'analyse.

La Demanderesse a notamment pu démontrer que les résultats d'analyse fournissent par exemple une teneur résiduelle en oxygène dans l'atmosphère à base d'azote extrêmement basse, laissant croire à l'exploitant que son procédé de brasage est parfaitement inerté, mais ne reflétant pas les conditions réelles de teneur résiduelle en oxygène dans son enceinte de brasage.

Il faut en fait signaler que les flux chimiques de brasage ou étamage couramment utilisés dans ces opérations ont des formulations à base résineuse, notamment des colophanes, complétées notamment par la présence d'alcool et d'acide.

On peut donc dans ce contexte faire les remarques suivantes :
a) en raison de la présence d'alcool dans l'atmosphère analysée, une technologie de mesure qui utiliserait une sonde en oxyde de zircone se révèle délicate d'emploi, en effet la température élevée de la cellule de mesure provoque une oxydation par l'oxygène résiduel dans l'atmosphère des hydrocarbures présents, la mesure est donc alors faussée par la disparition de l'oxygène ;
b) mais par ailleurs, la présence d'espèces réductrices dans l'atmosphère n'est pas sans entraîner des risques de réduction de l'oxyde de la cellule ;
c) on utilise souvent des cellules électrochimiques dites basse teneur, pour leur résistance aux hydrocarbures, mais qui présentent par ailleurs l'inconvénient de ne pas supporter longtemps des teneurs en oxygène élevées.

En effet, elles se saturent en oxygène, et reviennent très difficilement aux basses teneurs, la durée de retour aux basses teneurs étant bien entendu fonction croissante du temps d'exposition de la cellule à l'oxygène.

Il faut signaler en outre que ces cellules sont des piles électrochimiques qui se consomment, leur longévité étant directement proportionnelle à la quantité d'oxygène qu'elles auront vu passer, et donc typiquement un arrêt de production du client signifiant que l'inertage n'est plus assuré, les analyseurs associés risquent de voir un certain temps de l'air.
d) la composition des flux utilisés peut donner lieu à la précipitation dans les canalisations de résidus - solides ou semi-solides, liquides, pâteux - tels que des colophanes durcies, et donc au fait que le circuit de prélèvement peut être partiellement voire totalement obstrué. On peut alors observer paradoxalement l'obtention de mesures résiduelles d'oxygène extrêmement basses, laissant croire abusivement à l'exploitant que son procédé de brasage est parfaitement inerté.

En effet, en présence d'un bouchage, la pompe de l'analyseur tire au vide la portion restante, entraînant donc par un premier mécanisme des mesures d'oxygène résiduelles très faibles.

D'autre part, la cellule électrochimique va consommer le peu d'oxygène résiduel qui reste dans la portion libre de canalisation, entraînant donc également par ce second mécanisme des mesures d'oxygène résiduel très faibles.
e) un prélèvement de gaz peut également entraîner des particules solides telles des poussières d'étain de brasage.

Comme on l'aura compris à la lecture de ce qui précède, la combinaison de caractéristiques de l'installation d'analyse selon l'invention fournit une réponse extrêmement avantageuse aux inconvénients relevés sur les procédés d'analyse actuels.

L'installation permet notamment d'acheminer le gaz prélevé jusqu'au système de filtration dans des conditions ne permettant pas les dépôts de résidus, mais également de stopper efficacement les polluants gênants (notamment les formes aérosols), avant qu'ils ne viennent polluer les analyseurs.

Elle permet également de préserver la longévité des cellules, et de détecter efficacement toute amorce de bouchage du circuit de prélèvement qui pourrait altérer la fiabilité des mesures d'analyse fournies.

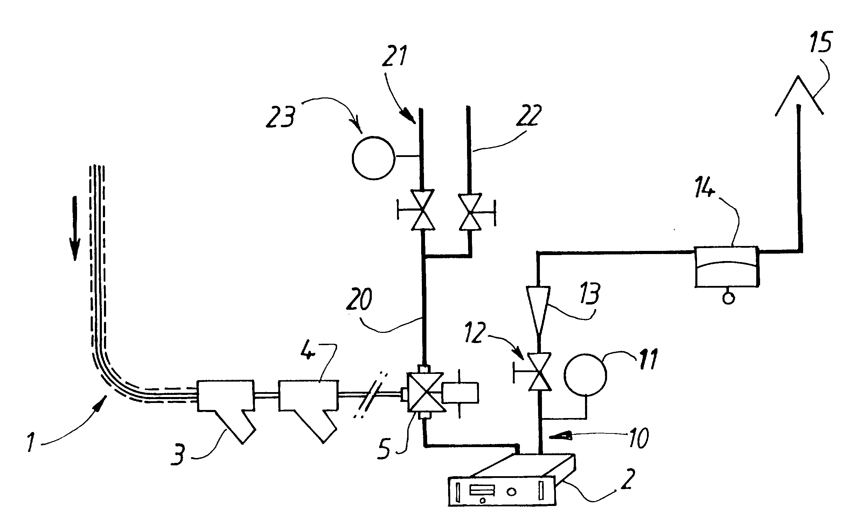

D'autres caractéristiques et avantages ressortiront de la description suivante donnée uniquement à titre d'exemple et faite en référence aux dessins annexés sous la forme d'une figure unique qui est une représentation schématique d'une installation d'analyse conforme à l'invention.

La figure fournit un exemple d'installation d'analyse d'atmosphère conforme à l'invention, permettant l'analyse de la teneur résiduelle en oxygène dans une atmosphère à base d'azote utilisée dans un four de brasage par refusion ou machine de brasage à la vague en électronique.

On reconnaît sur la figure la présence d'un analyseur d'oxygène 2, ici en l'occurrence un analyseur de type à cellule électrochimique.

Un échantillon de gaz à analyser parvient à l'analyseur 2 par la ligne de prélèvement 1, en passant successivement sur deux filtres à coalescence 3 et 4, de spécification différente.

Les filtres à coalescence sont couramment qualifiés en parlant de « pourcentage de particules arrêtées dont le diamètre est supérieur à une valeur donnée » : par exemple, un filtre sera dit arrêter 99 % des particules de 0,6µm et plus.

Sur la figure, les filtres 3 et 4 ont des performances de rétention croissantes : par exemple le premier filtre 3 est conçu pour arrêter 95% des particules de 0,3µm et plus, alors que le filtre 4 est conçu pour arrêter 99,9% des particules restantes.

Pour le mode de réalisation présenté, la portion de ligne de prélèvement 1 située entre l'enceinte (non représentée sur la figure) et le premier filtre à coalescence 3 est ici équipée d'un cordon chauffant (représenté sur la figure en trait pointillé) permettant de porter la portion considérée de ligne de prélèvement à une température suffisamment élevée pour d'éviter les dépôts liquides ou solides dans la ligne (par exemple de l'ordre de 150°C et plus).

L'échantillon de gaz ainsi filtré parvient ensuite à une électrovanne trois voies 5, puis de là à l'analyseur 2.

L'aval de l'analyseur est constitué d'une ligne d'évacuation de gaz 10, menant à un évent 15 en passant par une pompe à membrane 14. On note la présence sur cette ligne d'évacuation 10 d'une vanne de réglage 12, et d'un débitmètre 13, mais surtout d'un moyen de détection de bouchage 11 qui est situé immédiatement en aval de l'analyseur et constitué ici d'un pressostat réglé à environ 900 mbar absolus (-100 mbars relatifs).

Un gaz inerte tel l'azote parvient à l'analyseur 2 par la ligne de gaz 21/20, en passant par un pressostat 23, qui sert ici de détection de présence d'azote sur la ligne (réglé ici typiquement à 2 bars).

La ligne 22 sert quant à elle pour l'approvisionnement éventuel de l'analyseur en gaz étalon.

L'installation comporte par ailleurs des moyens (non représentés sur la figure) permettant l'acquisition et le traitement de données ainsi que la rétroaction sur certains éléments constitutifs de l'installation (on pourra à cet effet utiliser un automate programmable, ou un PC, voire une logique cablée), afin d'assurer l'une ou plusieurs des fonctions avantageuses suivantes :
- l'acquisition et le stockage, en continu ou à intervalle souhaité, de la teneur résiduelle en oxygène mesuré par l'analyseur 2 ;
- d'arrêter l'analyse dès que la teneur résiduelle en oxygène est supérieure à une limite donnée, par exemple 1000 ppm,
- de balayer à l'aide du gaz inerte en provenance de la ligne 21, l'analyseur durant les périodes de pose de production ou bien d'arrêt sécuritaire de l'analyse,
- de détecter l'absence d'azote sur la ligne 21 (pressostat 23) et d'en avertir par un signal d'alerte quelconque les opérateurs du site ;
- de prévoir des moyens d'alerte (visuels, sonores) en cas d'absence d'azote, ou encore de bouchage d'une canalisation, ou encore quand le niveau d'oxygène résiduel détecté par l'analyseur dépasse un niveau prédéfini (par exemple 300 ppm);
- d'afficher pour l'utilisateur les conditions de travail sur un écran de visualisation ;
- de tenter, à intervalle régulier dans le temps, des redémarrages automatiques du système d'analyse afin d'éviter à l'utilisateur de réinitialiser manuellement le cycle d'analyse (par exemple dès que la teneur résiduelle en oxygène est redescendue en dessous de 1000 ppm) ;
- arrêter définitivement le cycle d'analyse quand après plusieurs tentatives vaines de redémarrage automatique, la condition requise n'a pas pu être atteinte (teneur résiduelle en oxygène suffisamment basse ou encore présence d'azote suffisante sur la ligne 21).

On conçoit alors que l'installation précédemment décrite apporte une amélioration significative des installations d'analyse existantes, en améliorant la fiabilité et la longévité, par la mise en oeuvre combinée d'un ou plusieurs filtres à coalescence, d'une portion de ligne de prélèvement évitant les points froids de précipitation, et de moyens de détection de bouchage sur la ligne.

## Revendications

1. Installation d'analyse de la teneur en au moins un élément de l'atmosphère d'une enceinte de brasage ou étamage à l'aide d'un alliage métallique, comportant les éléments suivants :
- au moins une ligne (1) de prélèvement d'un échantillon de gaz de l'enceinte,
- au moins un analyseur (2) apte à analyser ledit élément,
- au moins un filtre (3, 4) à coalescence situé sur la ligne de prélèvement en amont de l'analyseur,
- des moyens permettant que la portion de ligne de prélèvement située entre l'enceinte et ledit au moins un filtre à coalescence soit dépourvue de points froids qui pourraient causer la précipitation de composés dans ladite portion de ligne,
- des moyens de détection (11) d'un éventuel bouchage de la ligne de prélèvement entre l'enceinte et l'analyseur.

2. Installation selon la revendication 1, caractérisée en ce qu'elle comporte plusieurs filtres à coalescence placés en série sur la ligne de prélèvement, présentant des performances de rétention différentes.

3. Installation selon la revendication 2, caractérisée en ce qu'elle comporte au moins deux filtres à coalescence placés en série offrant sur le parcours de prélèvement de gaz des performances de rétention croissantes.

4. Installation selon l'une des revendications 1 à 3, caractérisée en ce que lesdits moyens permettant d'éviter la formation de points froids consistent dans le fait de placer ledit au moins un filtre à coalescence à proximité immédiate de la paroi de l'enceinte où se connecte la ligne de prélèvement.

5. Installation selon l'une des revendications 1 à 3, caractérisée en ce que lesdits moyens pour éviter la formation de points froids consistent en ce que l'on place ledit au moins un filtre à coalescence à proximité de la paroi de l'enceinte où se connecte la ligne de prélèvement, et en ce que l'on isole thermiquement la portion de ligne de prélèvement située entre cette paroi de l'enceinte et ledit au moins un filtre à coalescence.

6. Installation selon l'une des revendications 1 à 3, caractérisée en ce que lesdits moyens permettant d'éviter la formation de points froids comprennent des moyens de chauffage de ladite portion de ligne de prélèvement située entre l'enceinte et ledit au moins un filtre à coalescence, aptes à porter ladite portion à une température au-delà de la température en deçà de laquelle peuvent intervenir des phénomènes de précipitation.

7. Installation selon l'une des revendications précédentes, caractérisée en ce que lesdits moyens de détection de bouchage comportent un pressostat (11) situé en aval de l'analyseur, sur sa ligne d'évacuation de gaz, en amont d'un organe de pompage.

8. Installation selon l'une des revendications 1 à 6, caractérisée en ce que lesdits moyens de détection de bouchage comportent un pressostat ou un organe mesureur de débit situé en amont de l'analyseur.

9. Installation selon l'une des revendications précédentes, caractérisée en ce qu'elle comporte un organe de refroidissement dudit au moins un filtre à coalescence, tel un ventilateur.
